# EUROPÄISCHE PATENTANMELDUNG

(11) **EP 1 193 328 A1**
(43) Veröffentlichungstag der Anmeldung: **03.04.2002**
(21) Anmeldenummer: 01121533.2
(22) Anmeldetag: 10.09.2001
(51) Int. Cl.: C23C 30/00

(54) **Schneidplatte mit Verschleisserkennung**

(30) Priorität: 02.10.2000 DE 10048899
(71) Anmelder: WALTER AG, 72072 Tübingen (DE)
(72) Erfinder: Vötsch, Wolfgang, 72414 Rangendingen (DE); Drobniewski, Jörg, 72116 Mössingen (DE)
(74) Vertreter: Patentanwälte Rüger, Barthelt & Abel

(57) **Zusammenfassung**

An einer Schneidplatte (1) ist eine kombinierte Beschichtung vorgesehen, die eine Verschleißschutzschicht (14) und eine Indikatorschicht (15) umfasst. Die Indikatorschicht (15) ist vorzugsweise an der oder den Freifläche(n) (4,5) Vorgesehen, d.h. bei Radialplatten an den Seitenflächen und bei Tangentialplatten an der Grund- (3) bzw. Deckfläche (6). Die Indikatorschicht (15) ist so empfindlich, dass schon eine kurzzeitige Benutzung der benachbarten Schneidkante (8,9,10,11) deutliche Spuren auf der Indikatorschicht (15) hinterlässt, wobei sich diese verfärbt und/oder abarbeitet, so dass darunterliegende anders farbige Schichten oder Materialien sichtbar werden. Durch den deutlichen Farbkontrast oder Helligkeitskontrast sind benutzte Schneidkanten (8,9,10,11) sofort ohne Weiteres identifizierbar. Die Nutzung der Freiflächen (4,5) als Indikatorflächen hat sich deshalb als besonders vorteilhaft herausgestellt, weil hier eine tribologisch möglicherweise auch ungünstige Beschichtung vorgesehen werden kann, ohne das Bearbeitungsergebnis der Schneidplatte (1) negativ zu beeinflussen.

## Beschreibung

Die Erfindung betrifft eine Schneidplatte, wie sie in Schneidwerkzeugen zur spanenden Bearbeitung von Werkstücken eingesetzt wird.

Fräswerkzeuge und andere zur spanenden Bearbeitung von Werkstücken vorgesehene Werkzeuge sind häufig mit ein oder mehreren Schneidplatten bestückt, die eine gewisse begrenzte Standzeit haben und deshalb von Zeit zu Zeit auszuwechseln sind. Schneidplatten, die lediglich eine Schneidkante aufweisen, sind dann auszutauschen. Schneidplatten, die mehrere Schneidkanten aufweisen, können häufig an ihrem Plattensitz gewendet, d.h. in einer weiteren Gebrauchslage eingesetzt werden, so dass eine bislang noch nicht genutzte Schneidkante in Aktivposition gebracht wird. Ggfs. kann die Schneidplatte auch an einem anderen Plattensitz weiterverwendet werden, an dem dann die betreffende, bislang noch unbenutzte, Schneidkante benutzt wird.

Der geschilderte Vorgang erfordert einige Aufmerksamkeit, um einerseits zu verhindern, dass Schneidplatten ersetzt oder gewendet werden, deren Schneidkanten bislang noch nicht im Einsatz waren und um andererseits zu verhindern, dass beim Austauschen von Schneidplatten oder beim Wenden derselben schon benutzte Schneidkanten als solche nicht erkannt und übersehen werden.

Aus der EP 0908259 A2 ist eine Schneidplatte bekannt, die mit einer kombinierten Beschichtung versehen ist. Die Spanfläche ist mit einem stoßunempfindlichen Werkstoff mit einer verschleißmindernden Oberfläche und einem niedrigen Reibwert versehen. Die Freifläche ist dagegen mit einem Schneidstoff oder einer Schneidstoffkomposition beschichtet, die eine höhere Abriebfestigkeit und eine größere Härte als der Schneidstoff bzw. die Schneidstoffkombination der Beschichtung der Spanfläche hat. Damit sollen der Freiflächenverschleiß sowie die Oberflächenqualität und die Maßhaltigkeit des Werkstücks verbessert werden.

Die oben erläuterte Problematik wird damit nicht gelöst.

Daraus ergibt sich die der Erfindung zugrundeliegende Aufgabe, eine Schneidplatte zu schaffen, die die Wartung entsprechender Zerspanungswerkzeuge, in denen die Schneidplatte verwendet wird, erleichtert.

Diese Aufgabe wird mit einer Schneidplatte nach Anspruch 1 gelöst.

Die erfindungsgemäße Schneidplatte ist an ihrer Freifläche bzw. an ihren Freiflächen mit einer abtragbaren Indikatorbeschichtung versehen, deren Farbe von der Farbe der darunterliegenden Fläche oder Schicht abweicht. Hierbei wird ein möglichst hoher Farbkontrast angestrebt. Die auf der Freifläche aufgebrachte Indikatorbeschichtung ist so beschaffen, dass sie möglichst schon nach kurzer Einsatzzeit der Schneidplatte, z.B. nach wenigen Minuten Zerspanungsbetrieb, deutliche Bearbeitungsspuren zeigt und zumindest teilweise abgetragen ist, so dass der farblich andere Untergrund sichtbar wird. Die Indikatorbeschichtung ist somit in einer möglichen Ausführungsform nicht abrasionsfest - ganz im Gegenteil, die Indikatorbeschichtung ist relativ abriebempfindlich, z.B. kann sie eine schwache Haftung auf der Unterlage aufweisen. Es ist aber auch möglich, eine gut laufende Indikatorbeschichtung vorzusehen, die sich farblich verändert, sobald die Schneidplatte in Gebrauch genommen wird.

Darüber hinaus oder anstelle dessen kann die Indikatorbeschichtung anderweitig empfindlich sein, um anzuzeigen, dass die betreffende benachbarte Schneidkante bereits in Betrieb war. Zum Beispiel kann die Indikatorbeschichtung wärmeempfindlich sein und bei Erwärmung über eine Grenztemperatur, die nur in Nachbarschaft einer aktiven Schneidkante auftritt, von z.B. 200°C eine Farbveränderung zeigen. Die Farbveränderung kann auf Oxidation oder anderweitigen Veränderungen beruhen und ist vorzugsweise irreversibel. War die benachbarte Schneidkante auch nur kurzzeitig in Betrieb und hat der betreffende, an die Schneidkante angrenzende, Freiflächenbereich wenigstens kurzzeitig eine Temperatur über der Grenztemperatur eingenommen, hat die Indikatorbeschichtung dann die Farbveränderung erhalten, die auf Dauer sichtbar bleibt. Die Farbeveränderung infolge thermischer Einwirkung hat den Vorteil, dass auch Freiflächenbereiche verfärbt werden, die im Betrieb keine direkte Berührung zu dem Werkstück haben.

Durch die genannte Indikatorbeschichtung wird an einem Schneidwerkzeug auf einfache Weise erkennbar, ob seine Schneidplatten bereits in Betrieb waren und welche Schneidkanten noch unbenutzt sind. Auf diese Weise können Schneidplatten ausgewechselt oder gewendet werden. Insbesondere wird vermieden, dass bereits gebrauchte Schneidplatten bei der Wartung übersehen werden, oder dass noch unbenutzte Schneidplatten gewechselt werden, oder dass beim Wenden von Schneidplatten schon benutzte Schneidkanten wieder in Aktivposition gebracht werden oder noch unbenutzte Schneidkanten unbenutzt bleiben. Die Wartung entsprechender Schneidwerkzeuge ist somit durch die erfindungsgemäße Schneidplatte wesentlich vereinfacht.

Die Indikatorbeschichtung ist vorzugsweise hell, z.B. gelb oder silbrig glänzend ausgebildet, während die Spanfläche vorzugsweise dunkel ausgebildet ist. Die Spanfläche ist vorzugsweise mit einer Aluminiumoxidbeschichtung (Al₂O₃) versehen, wobei sowohl unter als auch über der Al₂O₃-Schicht weitere Schichten vorgesehen sein können. Die Schneidplatte kann somit mehrlagig beschichtet sein, wobei die Al₂O₃-Schicht die verschleißmindernde Beschichtung bildet. Sie kann jedoch noch zusätzliche Deckschichten tragen. Anstelle der Al₂O₃-Schicht können auch andere Verschleißschutzschichten mit gleichen oder besseren Eigenschaften vorgesehen werden.

Zur Herstellung einer erfindungsgemäßen Schneidplatte wird auf den Grundkörper vorzugsweise zunächst insgesamt, d.h. auf Seitenflächen und auf Deckfläche sowie ggfs. auch auf die Grundfläche, eine verschleißmindernde Beschichtung aufgebracht, die eine Al₂O₃-Schicht enthalten kann. Als oberste Schicht wird bspw. eine nitritische Schicht (z.B. TiN) aufgebracht. Diese wird vorzugsweise ebenfalls flächendeckend vorgesehen und dann von Flächen entfernt, die einer größeren Verschleißbelastung unterliegen. Insbesondere wird die nitritische Schicht, die als Indikatorbeschichtung dienen soll, vorzugsweise von der Spanfläche entfernt. Dies kann durch mechanischen Abtrag, z.B. durch einen Bürstvorgang oder eine Strahlbearbeitung (Sandstrahlen), geschehen. Vorzugsweise wird dabei so vorgegangen, dass nicht nur die Spanfläche, sondern auch die sich anschließende Schneidkante freigelegt wird, so dass sich die Indikatorbeschichtung nicht ganz bis zu der Schneidkante erstreckt.

Der Bürst- oder Strahlbearbeitungsvorgang stellt zugleich eine nachträgliche Behandlung der Schneidkante und Spanfläche dar, durch die die Beschichtung im Bereich der Schneidkante und der Spanfläche geglättet wird, was sich günstig auf den Spanablauf auswirkt und einer Standzeiterhöhung entgegenkommt.

Vorteilhafte Einzelheiten der Erfindung sind Gegenstand von Unteransprüchen sowie der Zeichnung oder der Beschreibung zu entnehmen.

In der Zeichnung ist ein Ausführungsbeispiel der Erfindung veranschaulicht. Es zeigen:
Fig. 1 eine Schneidplatte mit einer Indikatorbeschichtung a ihrer Freifläche, in perspektivischer Darstellung, vor einem ersten Einsatz,
Fig. 2 die Schneidplatte nach Figur 1, nach einigen Minuten Betrieb ihrer ersten Schneidkante, in perspektivischer Darstellung,
Fig. 3 die Schneidplatte nach den Figuren 1 und 2, nach Benutzung von zwei Schneidkanten, und
Fig. 4 die Schneidplatte nach Figur 1, in einer ausschnittsweisen Schnittdarstellung und in einem anderen Maßstab.

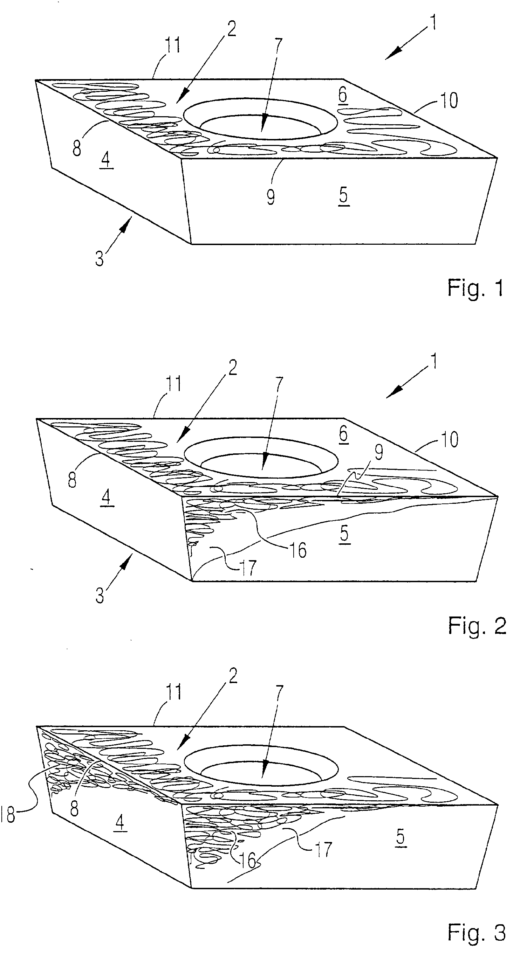

In Figur 1 ist eine Schneidplatte 1 veranschaulicht, die als Rechteckplatte ausgebildet ist. Sie weist einen Grundkörper 2 auf, der bspw. aus Hartmetall hergestellt ist. Der Grundkörper 2 kann gesintertes Wolframcarbid oder ein anderer Hartstoff sein. Es ist auch möglich, den Grundkörper 2 aus einem keramischen Material auszubilden.

Die Schneidplatte 1 weist eine Grundfläche 3, mehrere Seitenflächen 4, 5 und eine Deckfläche 6 auf. Die Deckfläche 6 und die Grundfläche 3 sind von einer Durchgangsbohrung 7 durchsetzt, die als Befestigungsbohrung dient. Bedarfsweise können zusätzlich oder anstelle der Befestigungsbohrung auch andere Befestigungsmittel oder -möglichkeiten vorgesehen sein.

Die Deckfläche 6 bildet bei dem vorgesehenen Einsatz der Schneidplatte 1 die Spanfläche, während die Seitenflächen 4, 5 Freiflächen bilden. Zwischen der Spanfläche 6 und den Seitenflächen 4, 5 sind Schneidkanten 8, 9, 10, 11 ausgebildet, die im vorliegenden Ausführungsbeispiel gerade ausgebildet sind.

Die Spanfläche 6 ist als ebene Fläche veranschaulicht. Bedarfsweise kann sie zusätzliche Strukturen wie Spanmulden, Spanbrecher oder dgl. aufweisen. Entsprechendes gilt für die Freiflächen 4, 5. Diese sind in Figur 1 als ebene Flächen veranschaulicht, wobei sie bedarfsweise auch facettiert (in Flächenbereiche unterteilt) oder anderweitig von der ebenen Fläche abweichend geformt sein können.

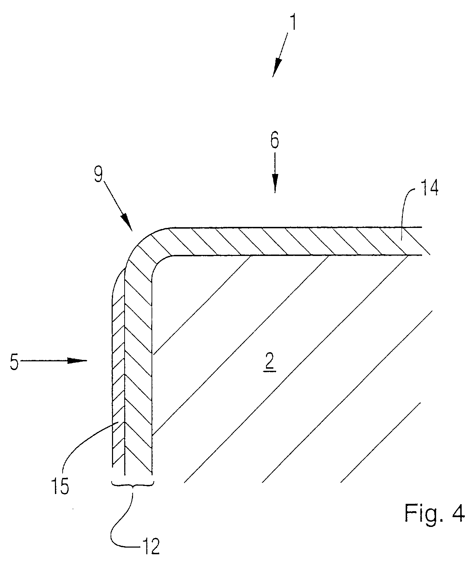

Die Schneidkanten 8, 9, 10, 11 können in Längsrichtung bedarfsweise von der geraden Form abweichen und gekrümmt oder geknickt ausgebildet sein. Sie sind in Querrichtung zweckentsprechend gerundet, wie bspw. aus Figur 4 hervorgeht, in der stellvertretend für die anderen Schneidkanten die Schneidkante 9 veranschaulicht ist. Aus Figur 4 geht außerdem der Aufbau einer an der Schneidplatte 1 vorgesehenen Beschichtung 12 hervor. Zu der Beschichtung gehört eine Grundschicht 14, die sich sowohl über die Seitenfläche 5 als auch die Deckfläche 6 erstreckt. Die Grundschicht 14 kann mehrschichtig aufgebaut sein und bildet eine verschleißmindernde Beschichtung. Sie kann z.B. eine Al₂O₃-Schicht sein oder enthalten. Zum Beispiel kann auf dem Grundkörper 2 zunächst eine Grundschicht, darauf eine Haftvermittelschicht und auf dieser wiederum die Al₂O₃-Schicht ausgebildet sein. Diese dreischichtige System bildet insgesamt die Verschleißschutzschicht 14.

Zu der Beschichtung 12 gehört außerdem eine Indikatorschicht 15, die zumindest im Anschluss an die Schneidkante 9 auf der Freifläche 5 vorgesehen ist. Im vorliegenden Ausführungsbeispiel ist die Indikatorschicht 15 eine Titannitridschicht, die gelb oder messingfarben aussieht. Dagegen ist die darunterliegende Verschleißschutzschicht 14 schwarz oder dunkel.

Die Indikatorschicht 5 hat keine optimalen tribologischen Eigenschaft und ist relativ dünn. Bei der Herstellung der Schneidplatte 1 ist sie auf die Verschleißschutzschicht 14 aufgebracht und zumindest von solchen Flächenbereichen wieder entfernt worden, auf denen die tribologischen Eigenschaften der Verschleißschutzschicht 14 gefordert sind. Dies ist insbesondere der Teil der Spanfläche 6, der mit Spänen in Berührung kommt. Das Entfernen der Indikatorschicht 15 von der Spanfläche 6 kann durch chemische oder physikalische oder mechanische Verfahren erfolgen, bspw. durch Bürsten oder anderweitiges abrasives Abtragen, bspw. Sandstrahlen. Eine solche Strahlbearbeitung hat außerdem glättende Wirkung auf die auf die Weise wieder freigelegte Verschleißschutzschicht 14 und die Schneidkante 9.

Die insoweit beschriebene Schneidplatte 1 weist in noch unbenutztem Zustand, wie in Figur 1 veranschaulicht, unversehrte Freiflächen 4, 5 auf, die insbesondere im Anschluss an die Schneidkanten 8, 9 noch ihre ursprüngliche Farbe aufweist und damit anzeigt, dass die Schneidkanten 8, 9 noch nicht in Benutzung waren. Im Falle einer TiN-Beschichtung der Seitenflächen 4, 5 ist die Indikatorbeschichtung im Anschluss an die Schneidkanten 8, 9 leuchtend messinggelb. Dagegen hat die Spanfläche 6 das typische Aussehen einer Al₂O₃ beschichteten Schneidplatte, d.h. sie ist relativ dunkel bis nahezu schwarz.

Zur weiteren Erläuterung wird davon ausgegangen, dass die Schneidplatte 1 in dem Werkzeugkörper eines Schneidwerkzeugs eingebaut ist, und zwar so, dass die Schneidkante 9 eine aktive Schneidkante bildet. Sobald das Schneidwerkzeug in Benutzung genommen wird, kommt die Schneidkante 9 mit dem Material eines Werkstücks in Berührung und beginnt das Material des Werkstücks spanend zu bearbeiten. Der Schneidplattenverschleiß ist durch die Verschleißschutzschicht 14, insbesondere im Bereich der Schneidkante 9 und der Spanfläche 6, gering. Die Freifläche 5 unterliegt jedoch einer relativ hohen Anfangsveränderung insofern, als sich die Indikatorschicht 15 im Bereich der Schneidkante 9 verfärbt. In den verfärbten Bereichen wird die im Vergleich zu der Indikatorschicht 15 eine andere Farbe erzielt und gegebenenfalls eine wesentlich dunklere Verschleißschutzschicht 14 sichtbar. Es bilden sich dadurch im Anschluss an die Schneidkante 9, wie aus Figur 2 ersichtlich, dunkle Verfärbungs- und Abtragbereiche 16 heraus, die sofort zu erkennen und leicht sichtbar sind. Die Verfärbung ist eine thermisch bedingte Veränderung, z.B. infolge von Oxidationserscheinungen. Es können sich, wie in Figur 2 angedeutet, Verfärbungsbereiche 17 herausbilden, indem die Indikatorschicht 15 in diesen Bereichen bspw. Anlauffarben annimmt. Diese können von einer Erwärmung der Schneidplatte infolge der spanenden Bearbeitung des Werkstücks durch die Schneidkante 9 herrühren. Nach längerem Einsatz kann die Freifläche 5 das in Figur 3 veranschaulichte Aussehen annehmen. Jedoch ist schon nach wenigen Minuten Zerspanungsbetrieb das in Figur 2 veranschaulichte Aussehen erreicht, so dass das Bedienpersonal auf den ersten Blick feststellen kann, dass die Schneidkante 9 bereits in Benutzung war, während die Schneidkante 8 noch vollkommen unbenutzt ist. Hat auch diese eine erste Benutzung erfahren, bietet sich das in Figur 3 veranschaulichte Aussehen. Die Freifläche 4 hat auch hier im Anschluss an die Schneidkante 8 einen dunklen Bereich 18 erhalten, der anzeigt, dass die Schneidkante 8 in Benutzung war.

Bei der Schneidplatte 1 handelt es sich um eine Wendeschneidplatte mit vier benutzbaren Schneidkanten 8, 9, 10, 11. Durch die Indikatorschicht 15 wird auf den ersten Blick sichtbar, welche der Schneidkanten 8, 9, 10, 11 bereits in Benutzung waren und welche noch unverbraucht sind. Die Wartung von mit solchen Schneidplatten bestückten Schneidwerkzeugen ist dann auf besonders einfache Weise möglich.

An einer Schneidplatte 1 ist eine kombinierte Beschichtung vorgesehen, die eine Verschleißschutzschicht 14 und eine Indikatorschicht 15 umfasst. Die Indikatorschicht ist vorzugsweise an der oder den Freifläche(n) vorgesehen, d.h. bei Radialplatten an den Seitenflächen und bei Tangentialplatten an der Grund- bzw. Deckfläche. Die Indikatorschicht 15 ist so empfindlich, dass schon eine kurzzeitige Benutzung der benachbarten Schneidkante 8, 9, 10, 11 deutliche Spuren auf der Indikatorschicht 15 hinterlässt, wobei sich diese verfärbt und/oder abarbeitet, so dass darunterliegende anders farbige Schichten oder Materialien sichtbar werden. Durch den deutlichen Farbkontrast oder Helligkeitskontrast sind benutzte Schneidkanten sofort ohne Weiteres identifizierbar. Die Nutzung der Freiflächen als Indikatorflächen hat sich deshalb als besonders vorteilhaft herausgestellt, weil hier eine tribologisch möglicherweise auch ungünstige Beschichtung vorgesehen werden kann, ohne das Bearbeitungsergebnis der Schneidplatte negativ zu beeinflussen.

## Patentansprüche

1. Schneidplatte
mit einem Grundkörper (2), der eine Grundfläche (3), Seitenflächen (4, 5) und eine Deckfläche (6) aufweist, von denen wenigstens eine (6) als Spanfläche und eine (4, 5) andere als Freifläche dient,
mit einer abtragbaren Indikatorbeschichtung (15), die an der Freifläche (4, 5) vorgesehen ist und deren Farbe von der Farbe einer sie tragenden Fläche (14) abweicht.

2. Schneidplatte nach Anspruch 1, **dadurch gekennzeichnet, dass** der Grundkörper (2) aus einem Hartmetall besteht.

3. Schneidplatte nach Anspruch 1, **dadurch gekennzeichnet, dass** der Grundkörper (2) eine verschleißmindernde Beschichtung (14) trägt.

4. Schneidplatte nach Anspruch 3, **dadurch gekennzeichnet, dass** die verschleißmindernde Beschichtung (14) zumindest an der Spanfläche (6) vorgesehen ist.

5. Schneidplatte nach Anspruch 1, **dadurch gekennzeichnet, dass** die verschleißmindernde Beschichtung (14) sowohl an der Spanfläche (6) als auch an der Freifläche (4, 5) vorgesehen ist.

6. Schneidplatte nach Anspruch 1, **dadurch gekennzeichnet, dass** die Indikatorbeschichtung (15) an der Freifläche (4, 5) auf die verschleißmindernde Beschichtung (14) aufgebracht ist.

7. Schneidplatte nach Anspruch 1, **dadurch gekennzeichnet, dass** die Indikatorbeschichtung (15) die Freifläche (4, 5) vollflächig einnimmt.

8. Schneidplatte nach Anspruch 1, **dadurch gekennzeichnet, dass** die Indikatorbeschichtung (15) verschleißempfindlich ist.

9. Schneidplatte nach Anspruch 1, **dadurch gekennzeichnet, dass** die Schneidplatte (1) mehrere nutzbare Schneidkanten (8, 9, 10, 11) aufweist.

10. Verfahren zur Herstellung einer Schneidplatte, bei dem diese zunächst mit einer verschleißmindernden Beschichtung und dann mit einer andersfarbigen Indikatorbeschichtung versehen wird, die nachträglich von ausgewählten Bereichen wieder entfernt wird.

11. Werkzeug mit einer Schneidplatte nach einem der vorhergehenden Ansprüche, **dadurch gekennzeichnet, dass** die Schneidplatte derart gehalten ist, dass sie einen positiven Freiwinkel festgelegt.
